# FASCICULE DE BREVET EUROPEEN

(11) **EP 2 366 147 B1**
(45) Date de publication et mention de la délivrance du brevet: **09.05.2018**
(21) Numéro de dépôt: 09797109.7
(22) Date de dépôt: 27.11.2009
(51) Int. Cl.: G06F 9/52

(54) **GESTIONNAIRE PHYSIQUE DE BARRIERE DE SYNCHRONISATION ENTRE PROCESSUS MULTIPLES**
PHYSISCHER MANAGER DER SYNCHRONISATIONSBARRIERE ZWISCHEN MEHREREN PROZESSEN
PHYSICAL MANAGER OF SYNCHRONIZATION BARRIER BETWEEN MULTIPLE PROCESSES

(30) Priorité: 16.12.2008 FR 0807089
(43) Date de publication de la demande: 21.09.2011
(73) Titulaire: Bull SAS, 78340 Les Clayes-sous-Bois (FR)
(72) Inventeur: SOLINAS, Angelo, F-75014 Paris (FR); CHICHEPORTICHE, Jordan, F-75014 Paris (FR); DERRADJI, Saïd, F-91130 Issy-les-Moulineaux (FR); PAIRAULT, Jean-Jacques, F-92100 Boulogne (FR); MENYHART, Zoltan, F-38400 Saint-Martin d'Heres (FR); JEAUGEY, Sylvain, F-38240 Meylan (FR); COUVEE, Philippe, F-38190 Villard Bonnot (FR)
(74) Mandataire: Bonnet, Michel
(86) Numéro de dépôt international: PCT/FR2009/052322
(87) Numéro de publication internationale: WO 2010/070222

(56) Documents cités:
- US-A1- 2007 106 997
- US-A1- 2007 113 233
- W. E. COHEN, H. G. DIETZ, J. B. SPONAUGLE: "Dynamic Barrier Architecture For Multi-Mode Fine-Grain Parallelism Using Conventional Processors" INTERNET ARTICLE, [Online] mars 1994 (1994-03), pages 1-23, XP002533890 Extrait de l'Internet: URL:http://aggregate.org/TechPub/TREE94_10 /tree94_10.ps> [extrait le 2009-06-25]
- SAMPSON J ET AL: "Fast Synchronization for Chip Multiprocessors" INTERNET CITATION, [Online] vol. 33, no. 4, novembre 2005 (2005-11), pages 64-69, XP002417542 ACM SIGARCH Computer Architecture News Extrait de l'Internet: URL:http://www.cse.ucsd.edu/~rakumar/dasCM P05/paper07.pdf> [extrait le 2007-01-23] & , Extrait de l'Internet: URL:http://portal.acm.org/citation.cfm?id= 1105743> [extrait le 2009-06-25]

## Description

La présente invention concerne le traitement de processus exécutés en parallèle.

Certains logiciels ou programmes d'ordinateur prennent un temps important pour exécuter ou accomplir une tâche donnée. Pour être plus efficace et diminuer les temps de calcul, ces programmes peuvent tirer avantage de la nature parallèle des ordinateurs sur lesquels ils sont exécutés. Par nature parallèle d'un ordinateur, on entend un ordinateur sur lequel sont montés plusieurs processeurs ou au moins un processeur à plusieurs coeurs, ou au moins un processeur à plusieurs files d'exécution ("threads").

Pour profiter de la nature parallèle, un programme d'ordinateur divise sa tâche (ou tâche-principale) en plusieurs sous-tâches, dont les calculs peuvent être effectués en parallèle par différents processus. Chaque processus aura donc pour objet d'exécuter et d'accomplir une de ces sous-tâches. Une fois qu'un processus aura terminé sa sous-tâche en cours, il sera possible de lui attribuer une seconde sous-tâche à accomplir, après laquelle il lui sera éventuellement attribuer une sous-tâche suivante et ainsi de suite.

L'utilisation d'une multitude de processus (traitement multiprocessus) implique un besoin de synchronisation de ces derniers. Cette synchronisation a notamment pour but de permettre une restructuration ordonnée de la tâche principale lorsque les sous-tâches ont été accomplies.

Une telle synchronisation est généralement assurée par un mécanisme dit "mécanisme de synchronisation inter-processus". Ce mécanisme doit être rapide afin de ne pas annuler l'avantage temporel tiré de l'utilisation de processus exécutés en parallèle.

Pour réaliser la synchronisation sus-mentionnée, on connaît un mécanisme de nature logicielle dit 'mécanisme de barrière'. Ce mécanisme peut être basé sur divers algorithmes qui suivent un même schéma principal décrit ci-après.

Dans un premier temps, un programme d'ordinateur destiné à accomplir une tâche est exécuté via *n* processus, eux mêmes étant aptes à exécuter un ensemble de sous-tâches. Chaque sous-tâche est divisée en blocs successifs destinés à accomplir des pas de travail, tels qu'un calcul intermédiaire par exemple. Ainsi, les blocs ou calculs intermédiaires des différents processus, sont exécutés en parallèle. Chaque processus ayant terminé un bloc, se met en attente au niveau d'une barrière (barrière de synchronisation), jusqu'à ce que tous les autres blocs parallèles des autres processus sont terminés et ont rejoint à leur tour la barrière. C'est seulement quand tous les processus ont atteint la barrière, que les blocs suivants sont exécutés lors d'un suivant pas de travail. Ce principe est décrit ci-après à l'aide d'un diagramme temporel.

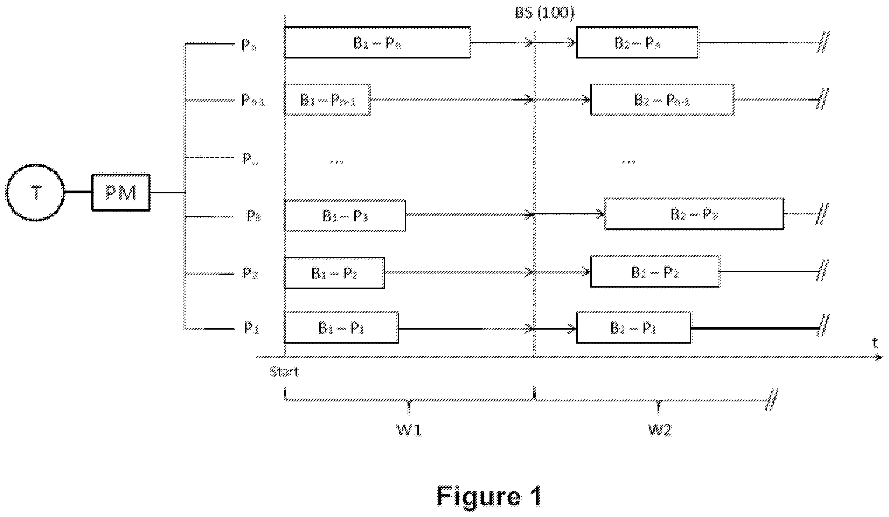

La figure 1 montre un mécanisme de barrière et ainsi le fonctionnement général d'une barrière de synchronisation. En partant d'une tâche principale T, un gestionnaire de processus PM va dans un premier temps décomposer la tâche T, en *n* sous-tâches ST. Ces *n* sous-tâches ST seront exécutées par *n* processus P. En d'autres termes, la tâche principale T complexe est décomposée en plusieurs sous-tâches ST simples, chacune de ces sous-tâches étant accomplie par un processus distinct.

Les résultats obtenus des différentes sous-tâches ST exécutées par les processus P seront au final réunis en vue d'accomplir la tâche principale T.

Remarquons que la notion de gestionnaire de processus PM est à comprendre au sens large. Ainsi, le gestionnaire PM n'est pas nécessairement un élément propre. En effet, le gestionnaire de processus peut généralement être vu comme une capacité d'un programme d'ordinateur d'implémenter une méthode de découpage passive ou active pour permettre aux processus de se répartir les sous-tâches entre eux. La capacité peut être implicite, déterminée par un des processus ou encore correspondre à un découpage prédéfini par un utilisateur.

Comme mentionné plus haut, lors de la décomposition d'une tâche en une multitude de processus P*ⱼ*, il existe un besoin de synchronisation dans l'exécution en parallèle de ces différents processus. Pour cela, les *n* processus sont eux-mêmes divisés en blocs B, qui sont à exécuter successivement dans le temps. Le sous-ensemble des blocs B qui sont en exécution en même temps (et issus de différents processus P) constitue un pas de travail W. Par conséquent, chaque ensemble de blocs B d'un même rang *i* constitue un pas de travail W distinct.

Les blocs B*ᵢ* du pas de travail de rang *i*, noté W*ᵢ* sont exécutés en parallèle. Le temps t d'exécution de blocs B issus de différents processus P*ⱼ* est variable. Pour assurer la synchronisation mentionnée ci-dessus, les blocs B sont soumis à une barrière de synchronisation BS (100). Cette barrière BS (100) est appelée par chaque processus P lorsqu'il a fini d'exécuter son bloc B*ᵢ* en cours. C'est la barrière de synchronisation BS (100) qui autorise un passage au bloc B*ᵢ₊₁* d'un rang suivant, et ceci seulement lorsque tous les blocs B*ᵢ* en cours auront "rejoint" la barrière, c'est-à-dire informé celle-ci que leur exécution est terminée.

Le premier bloc B terminé, c'est-à-dire celui avec un temps t d'exécution le plus court, informe par requête la barrière de synchronisation BS (100) d'une part qu'il a terminé son travail et d'autre part du nombre de blocs en cours restant lors du même pas de travail. Généralement, le nombre de blocs lors d'un pas de travail est équivalent au nombre *n* de processus P.

Les barrières de synchronisation sont habituellement munies d'un compteur. Le compteur est initialisé lorsque le premier bloc B a rejoint la barrière. Par la suite, le compteur est décrémenté à chaque fois qu'un autre bloc B rejoint la barrière BS (100). Ainsi, la barrière BS (100) peut suivre la progression (ou avancement) d'un pas de travail, et plus précisément la terminaison de chaque bloc B en cours. Lorsque le dernier bloc B, à savoir celui avec un temps t d'exécution le plus élevé aura rejoint la barrière BS (100), cette dernière informe chaque processus P et les autorise à transiter vers un pas de travail suivant W. À nouveau, ce pas de travail W suivant est constitué de blocs B exécutés en parallèle et issus des différents processus P. Lors de ce pas de travail suivant, le mécanisme de la barrière BS (100) est analogue au précédent. Cela se répète pour chaque pas de travail, et se poursuit jusqu'à terminaison des processus P. La tâche T sera alors accomplie par reconstitution des résultats des processus P.

De tels algorithmes nécessitent un certain nombre d'interactions entre les processus, blocs et la barrière. Ces interactions seront décrites plus loin dans la description détaillée et comprennent l'initialisation de la barrière, l'information donnée à la barrière lorsqu'un bloc a terminé son travail, la vérification du fait que tous les sous processus ont terminé leur bloc en cours, notamment. Ces interactions, lorsqu'elles sont gérées par des barrières de nature logicielle, sont relativement lentes et très consommatrices en bande passante.

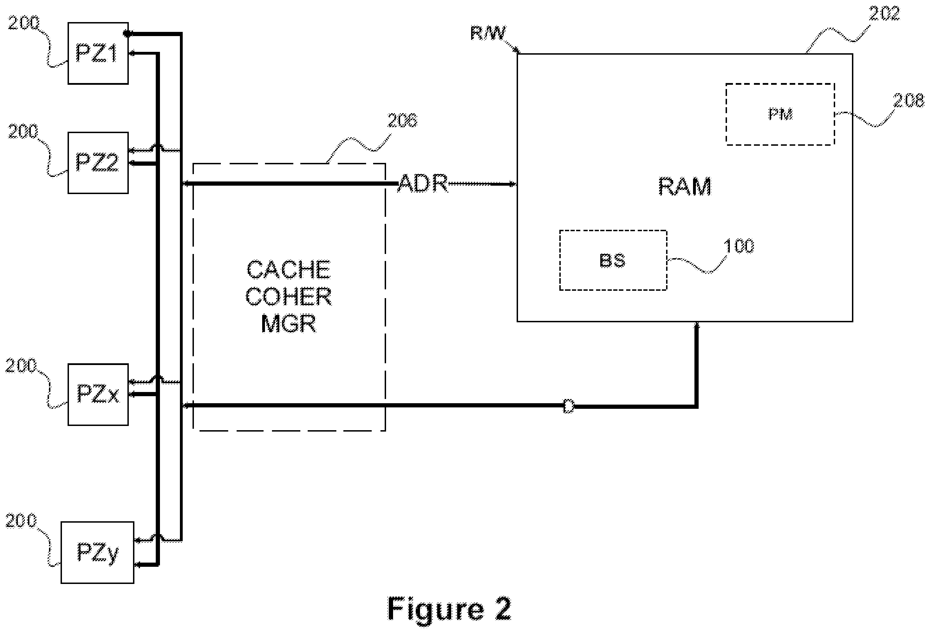

La figure 2 relative à l'art antérieur représente une implémentation de barrière de synchronisation BS (100) connue. Les mécanismes connus sont implémentés dans des logiciels. Ainsi, les données définissant la barrière de synchronisation BS (100) sont stockées dans la mémoire RAM (202) (signification en langue anglaise de RAM : *Random Access Memory)* d'un ordinateur (ou autre dispositif informatique) et les différents processus P accèdent (par lecture/écriture R/W) à cette mémoire RAM (202) pour interagir avec ladite barrière BS (100). Cet accès se fait au moyen d'un espace d'adresse et d'une adresse ADR (détaillé plus loin). L'accès comprend, tel que décrit plus haut, l'initialisation de la barrière BS (100) (avec l'initialisation du compteur), le fait d'informer la barrière BS (100) à chaque fois qu'un bloc B a terminé son travail lors d'un même pas de travail W, vérifier si tous les processus P ont terminé leur bloc B du pas de travail W en cours, etc. Le programme destiné à effectuer ces fonctions est lui aussi actif en mémoire vive, notamment par appel d'une bibliothèque de fonctions.

Un espace d'adresse peut être segmenté en segments indépendants. Par segment on entend généralement un segment de mémoire défini par deux valeurs :
- l'adresse auquel ce segment commence (adresse de base), et
- la taille du segment.

Un segment constitue donc une plage d'adresses continues dans une mémoire principale (physique ou virtuelle).

La figure 2 montre un dispositif informatique comprenant plusieurs processeurs PZ₁ à PZ_{y} (200), un gestionnaire d'accès en mémoire CACHE COHER MGR (206), une mémoire RAM (202) contenant une zone de programme dans laquelle se trouve la barrière de synchronisation BS (100) de nature logicielle. Le dispositif selon la figure 2 comprend donc une unité de traitement capable de traitements multi-processus. Les processus vont alors s'exécuter sur différents processeurs, sur différents coeurs ("cores") de processeurs, et/ou encore sur différents fils d'exécution ("threads"). L'unité de traitement procure à ces processeurs ce qu'on appelle un "espace d'adresse", notamment vers la mémoire vive, où se trouvent le code et les données qui définissent la barrière de synchronisation BS (100) logicielle, dans une zone associée à une adresse précise ADR, qui peut être l'adresse du début de la zone. Le dispositif de la figure 2 comprend en outre un gestionnaire de processus (208) du type comme défini plus haut pour décomposer une tâche T en n processus P, eux-mêmes divisés en blocs B successifs.

Les barrières de l'art antérieur (figure 2) permettent la mise en oeuvre d'une synchronisation entre différents processus P. Mais, comme déjà évoqué, la nature logicielle d'une barrière la rend lente par rapport à certains besoins. En effet, à chaque fois qu'un processus P interagit avec celle-ci, il est fait appel à une bibliothèque de fonctions de la barrière BS (100). De plus, au sein de la bibliothèque, il faut de nombreuses interactions avec la mémoire pour lire et écrire les données de mise à jour de la barrière, jusqu'à détection de ce que tous les processus ont atteint le point de rendez-vous (« barrière de synchronisation »). Ensuite, une fois que le processus P a informé la barrière BS (100), le processus P doit régulièrement interroger la barrière BS (100) pour voir si les autres blocs B en cours ont terminé leur travail.

Tout ceci, et notamment les nombreuses interactions cités ci-dessus, fait que les barrières de synchronisation BS (100) de nature logicielle sont lentes et consommatrices en bande passante. Cela se traduit par des pertes de cycles d'horloge, ce qui est d'autant plus gênant que l'on utilise le mode multi-processus pour aller plus vite.

En outre, il risque de se produire que différents blocs appartenant à des processus respectifs distincts informent la barrière en même temps ; d'où des conflits d'accès mémoire générateurs de problèmes supplémentaires de latence et de bande passante (gestion des conflits par le CACHE COHER MGR).

Le document « Dynamic Barrier Architecture For Multi-Mode Fine-Grain Parallelism Using Conventionnal Processors » de W. E. COHEN, H. G. DIETZ, J. B. SPONAUGLE décrit la transmission par un processeur d'une requête formatée comme une requête de lecture d'une mémoire. Cette requête est cependant transmise à une barrière de synchronisation comportant un arbre logique associé au processeur. L'arbre logique est conçu pour indiquer au processeur lorsque tous les processeurs impliqués dans la synchronisation ont atteint la barrière de synchronisation, afin que le processeur continue son exécution.

La présente invention vient améliorer la situation.

A cet effet, l'invention vient introduire un dispositif informatique à barrière de synchronisation selon la revendication 1.

Des caractéristiques optionnelles sont énoncées dans les revendications 2 à 13.

Egalement, la présente invention vient introduire un procédé de traitement informatique selon la revendication 14.

Des caractéristiques optionnelles sont énoncées dans la revendication 15.

D'autres caractéristiques et avantages de l'invention apparaîtront à l'examen de la description détaillée ci-après et les dessins annexés sur lesquels :
- la figure 1 est un diagramme temporel qui illustre le fonctionnement général d'un mécanisme de barrière,
- la figure 2 est le schéma de principe d'une implémentation d'une barrière de synchronisation logicielle de l'art antérieur,
- la figure 3 représente un dispositif informatique comprenant une mémoire et une unité de traitement, capable de traitements multiprocessus sur différents processeurs avec un circuit matériel formant gestionnaire de barrière de synchronisation,
- la figure 4 représente un circuit matériel formant gestionnaire de barrière de synchronisation comprenant une mémoire dédiée et un microprogramme,
- la figure 5 représente un automatisme de barrière de synchronisation selon un mode de réalisation de l'invention, et
- la figure 6 représente un organigramme des principales opérations selon un mode de réalisation de l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

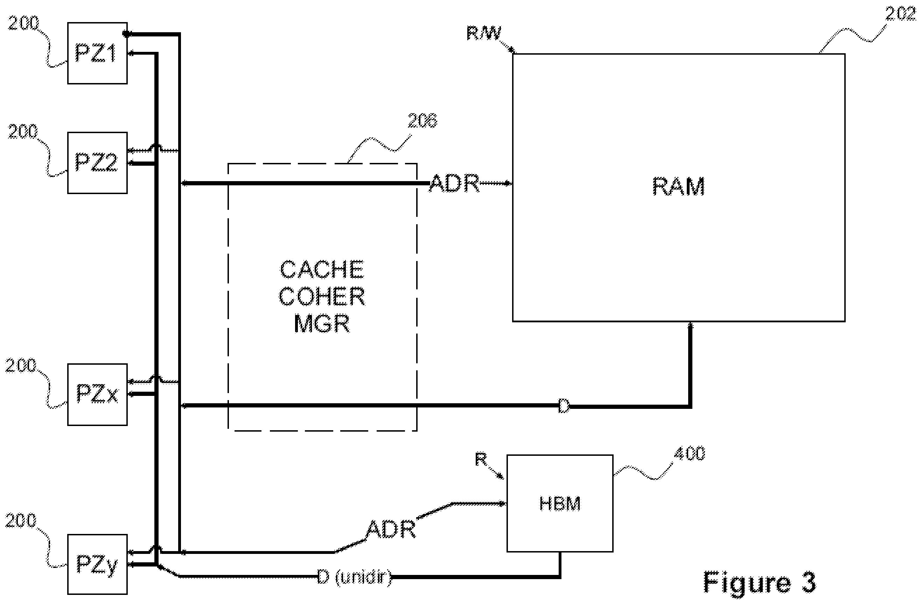

La Demanderesse est parvenue à surmonter les problèmes de l'art antérieur cités et propose ainsi une barrière de nature physique ou matérielle. Elle sera maintenant décrite en référence à la figure 3, qui propose une telle barrière de nature physique ou matérielle. Ainsi, le dispositif informatique de la figure 3 comprend une mémoire RAM (202), une unité de traitement capable de traitement multi-processus sur différents processeurs PZ₁ à PZ_{y} (200), et un gestionnaire d'accès en mémoire COHER CACHE MGR (206) entre ladite mémoire RAM (202) et les processeurs PZ (200).

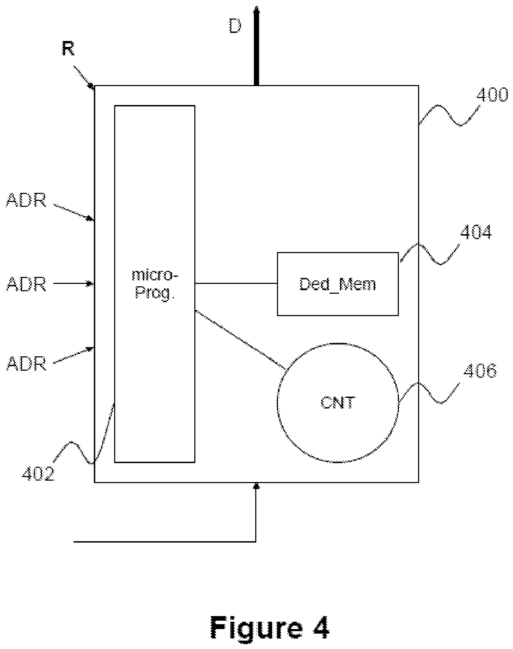

Dans le mode de réalisation décrit ici, le dispositif comprend en outre un circuit matériel formant gestionnaire de barrière de synchronisation HBM (400), comprenant une mémoire dédiée Ded_MEM (404) et un microprogramme micro-Prog (402) tel que représenté sur la figure 4. A ce stade, le gestionnaire HBM (400) n'a besoin que d'une sortie de données « D (unidir) ». En pratique, il s'agit d'une entrée/sortie notamment pour des raisons de compatibilité (lecture/écriture R/W) avec le bus connecté.

Dans le mode de réalisation décrit les liaisons adresse/données vers le circuit matériel (HBM, 400) évitent le gestionnaire d'accès en mémoire COHER CACHE MGR (206).

De manière générale, le gestionnaire de barrière de synchronisation HBM (400) va directement interagir avec les processus P qui participent à la barrière BS (100). L'interaction peut être suivi d'un stockage de données dans la mémoire dédiée Ded_MEM (404).

Le gestionnaire de barrière de synchronisation HBM (400) peut par exemple se trouver dans un processeur, dans un jeu de puces (« chipset » ou autre) ou comme représenté sur la figure 3 au sein d'une composante supplémentaire tel qu'un circuit matériel. Le gestionnaire HBM (400) doit être accessible pour toute transaction issue des processus P participant à la barrière BS (100) et visant ce gestionnaire. Le gestionnaire HBM (400) peut donc être accédé ou appelé par toute requête visant son espace de mémoire. C'est ainsi que de multiples adresses peuvent viser la même barrière BS (100) ("address aliasing").

En d'autres termes, chaque processus P émettant une requête vers la barrière de synchronisation BS (100) porte :
- dans les poids supérieurs de cette requête, l'adresse de la barrière, et
- dans les poids inférieurs, des données supplémentaires.

Bien évidemment, il est possible d'organiser librement dans les poids supérieurs ou inférieurs (poids choisis) la localisation les informations susmentionnées (adresse et données). Ainsi, les poids supérieurs de la requête peuvent porter lesdites données supplémentaires et les poids inférieurs l'adresse de la barrière.

Un exemple de données supplémentaires peut être le nombre de processus P participant à la barrière BS (100). Chacun des processus P peut ainsi viser une seule et même barrière BS (100) en lui communiquant des informations nécessaires à la synchronisation. Ces informations peuvent être stockées par le micro-programme micro-Prog (402) dans sa mémoire dédiée Ded_MEM (404) et ensuite traitées par le micro-programme micro-Prog (402) du gestionnaire de barrière de synchronisation HBM (400).

En appliquant ce principe, le gestionnaire de barrière de synchronisation HBM (400) peut gérer plusieurs barrières de synchronisation BS (100) à la fois. Cette possibilité est importante dans certaines applications.

Considérons maintenant un groupe de n processus P qui utilisent pour leur synchronisation une barrière physique. Dans une première étape, la barrière BS (100) est dans son état initial, et aucun des n processus P n'y a accédé. Les processus P se trouvent dans un premier pas de travail W et exécutent chacun leurs premiers blocs B (voir figure 1). Similairement à ce qui est décrit plus haut, le premier processus P ayant terminé son bloc B, informe la barrière BS (100) au moyen d'une requête. Cette requête comprend sur ses poids inférieurs le nombre *n* de processus P participant à la barrière, ce qui permet l'initialisation d'un compteur CNT (406) de la barrière BS (100) une fois la première requête reçue. C'est à la réception de cette première requête que la barrière de synchronisation BS (100) passe au mode (ou état) activé. A partir de là, chaque fois qu'une requête vise la barrière BS (100), le gestionnaire de barrière de synchronisation HBM (400) va décrémenter (décomptage) le compteur CNT (406). Il n'est répondu aux requêtes par des données D que lorsque le gestionnaire de barrière de synchronisation HBM (400) a reçu toutes les requêtes issues des n processus P participant à la barrière BS (100). À ce moment là, la synchronisation est considérée comme effective. L'ensemble des processus P est alors autorisé à transiter vers le pas de travail W suivant.

Notons qu'une fois un bloc terminé, le processus correspondant n'interroge qu'une seule fois la barrière BS pour déterminer l'avancement du pas de travail W. Ceci en raison du fait que la barrière BS est capable de stocker dans son espace de mémoire Ded_MEM (404) propre, le nombre de requêtes déjà reçues. Chaque processus demeurera en attente jusqu'à réception de la réponse issue de la barrière BS. Il n'y a donc pas lieu d'une interrogation multiple (régulière ou non) des processus vers la barrière. De plus, chaque interrogation est moins coûteuse en termes de bande passante. Ceci est à l'origine du gain en bande passante atteint par l'invention.

Incidemment, remarquons ici que le temps d'exécution t d'un bloc B n'est pas nécessairement lié avec l'arrivée de celui-ci à la barrière de synchronisation BS. En effet, pour des raisons de concurrence, de non-ordonnancement des voies de communication, de conflits ou encore d'arbitrage, une seconde requête partie plus tard qu'une première requête peut atteindre la barrière BS avant ladite première requête. Toutefois, ceci ne change rien au fonctionnement de la barrière selon l'invention. Pour des raisons de simplicité, on considère dans la présente description, qu'une requête émise par un premier processus ayant un temps d'exécution t plus court qu'un second processus, rejoindra la barrière BS avant la requête émise par le second processus.

Dans un mode de réalisation de l'invention, l'espace de mémoire de la barrière de synchronisation BS (100) est implémenté dans l'espace de mémoire consacré au bus PCI de l'ordinateur.

Dans cet exemple, ce que l'on a appelé « requête » provient d'une instruction « load » du processeur avec une adresse de l'espace mémoire du bus PCI. Cette requête est un message sur le bus système. Cet espace de mémoire permet une interaction rapide entre les processus P et/ou requête et la barrière de synchronisation BS (100).

Si plusieurs barrières sont requises, il peut être avantageux que le gestionnaire de barrière de synchronisation gère ces barrières en relation avec des segments de mémoire, par exemple des pages de mémoire. Cette pluralité de barrières peut être branchée sur un même circuit ou sur des circuits distincts.

Ainsi, la mémoire PCI offre suffisamment d'espace pour prévoir une taille prédéterminée de page de mémoire pour chaque barrière tout en permettant de fournir un accès protégé entre barrières.

Par exemple, pour des pages de 64 KB (Kilo-Bytes), ceci permet l'utilisation des 16 poids inférieurs (bits) d'une requête (appel) pour transmettre des données (notamment ADR); Le gestionnaire de barrière de synchronisation HBM (400) peut donc héberger M*64KB pages, où M est le nombre de barrières BS (100) physiques implémentées dans le gestionnaire de barrière de synchronisation HBM (400). M peut notamment être de 512, ce qui aboutit à un espace de mémoire total de 32 MB (Méga-Bytes). Ces 32 MB correspondent bien évidemment à une mémoire de type virtuelle qui n'est donc pas à considérer comme de « vrais » MB mais sont simplement vus comme tel par l'application à synchroniser. Ci-après est représenté un exemple d'une composition d'une requête qui peut être utilisée pour accéder à la mémoire (R [J..I] = bits de la requête de I à J). Cette requête comprend notamment l'adresse de la barrière BS (100), une commande en cours d'exécution (détaillée plus loin), l'indication s'il s'agit d'une synchronisation à un ou plusieurs niveaux (détaillé ci-dessous) et le nombre de processus participant à la synchronisation et donc à la barrière.

| R[63..16] | R[15..9] | R[8] | R[7..0] |
|---|---|---|---|
| Adresse (ADR) de la barrière BS | Commande | Niveau(x) de synchronisation; Bit: | Nombre de processus participant à la barrière |
| | | 1 → 2 Niveaux | |
| | | 0 → 1 Niveau | |

Dans le bit R[8], les valeurs 0 ou 1 correspondent respectivement à une synchronisation à un niveau et une synchronisation à deux niveaux. Un niveau de synchronisation supérieur est détaillé dans l'exemple de réalisation ci-dessous.

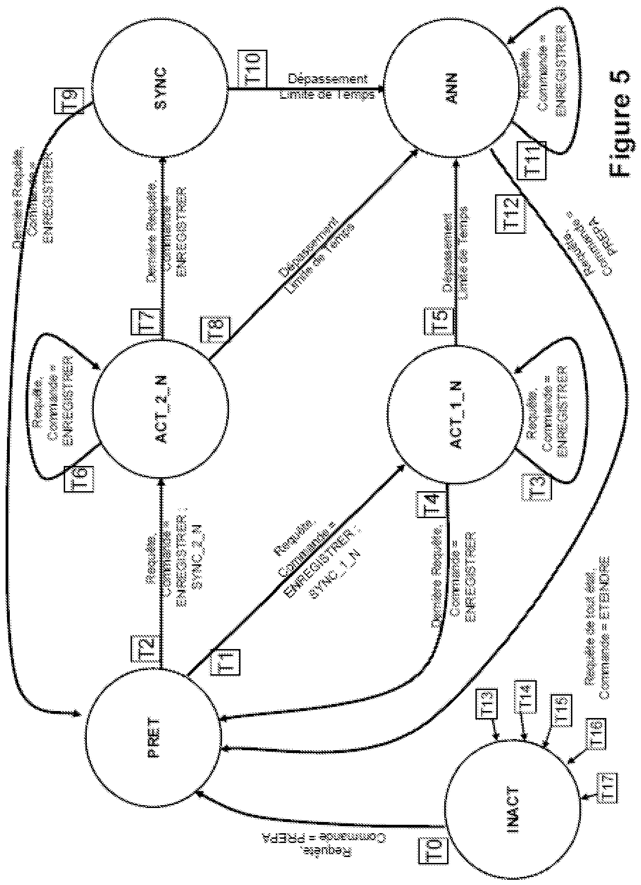

La figure 5 est relative à un exemple de réalisation d'un gestionnaire de synchronisation HBM (400), lequel est apte à gérer une synchronisation de niveau supérieur, et plus précisément ici à deux niveaux. Une synchronisation à deux niveaux peut par exemple être utilisée lorsque plusieurs groupes distincts de processus P doivent être synchronisés, avec chacun des groupes possédant une barrière BS (100) physique (ou matérielle). Dans ce cas, le gestionnaire de synchronisation HBM (400) doit gérer le cas où chaque groupe doit être synchronisé à lui seul, puis l'ensemble des groupes doivent être synchronisés entre eux.

La première requête reçue par la barrière BS (100) à un état prêt PRE, contient sur ses poids inférieurs une information indiquant s'il s'agit d'une synchronisation à un ou à deux niveaux. S'il s'agit d'une synchronisation à un niveau, celle-ci va être gérée par une barrière à un niveau, ou plus précisément par un état actif ACT de la barrière conçue pour un niveau (état ACT_1_N). Si au contraire il s'agit d'une synchronisation à deux niveaux, cette même barrière entrera dans un état actif ACT conçu pour deux niveaux (état ACT_2_N), auquel cas son comportement sera tel que décrit ci-après :
Lorsque toutes les requêtes ont été reçues par la barrière BS (100), celle-ci choisit un des processus P comme étant maître M parmi tous les processus P participants à la barrière BS (100). Dans un premier temps, seulement la requête du maître M se verra répondre par une donnée D spéciale indiquant qu'il est le maître du groupe. A partir de là, le maître est libre d'accomplir le second niveau de synchronisation. Ce second niveau de synchronisation peut par exemple être une barrière BS (100) de nature logicielle. Lorsque le maître M a terminé ce second niveau de synchronisation, il transmet une dernière requête à la barrière BS (100). En réponse à cette dernière requête, la barrière répond à toutes les autres requêtes issues des autres processus P participant à la barrière BS (100) (y compris le maître M), et retourne dans l'état prêt PRE. Le maître M est dynamique et peut être redéfini à chaque synchronisation.

### Exemple de réalisation.

Les différents états de l'automatisme de barrière représentés sur la figure 5 sont les suivants :
- état veille INACT,
- état prêt PRE,
- état actif avec synchronisation à un niveau ACT_1_N,
- état actif avec synchronisation à deux niveaux ACT_2_N,
- état synchronisation SYNC, et
- état annulation ANN.
Chaque état est détaillé ci-dessous.

### • INACT

La barrière physique est en état veille et inactive. La seule transition possible est la transition T0. Cette transition correspond à la réception de la barrière d'une requête avec une commande de mise en état prêt PRE dite PREPA (Commande = PREPA en vue d'activer la barrière. La barrière passe à l'état prêt PRE.

### • PRE

La barrière physique est prête à recevoir des requêtes des processus participants à la barrière.

Selon le mode de réalisation décrit, trois transitions peuvent avoir lieu : T1, T2 ou T13. Selon la requête, la barrière choisira laquelle des transitions à effectuer.
- Transition T1 : Cette transition correspond à la réception de la barrière d'une requête contenant une commande d'enregistrement ENREGISTRER (Commande = ENREGISTRER) en vue d'initialiser la barrière. La requête comprend dans ses poids inférieurs, l'information qu'il y a besoin d'une synchronisation à un seul niveau (SYNC_1_N). La barrière est activée et se trouve alors en état actif avec synchronisation à un niveau ACT_1_N.
- Transition T2 : Similairement à T1, cette transition correspond à la réception de la barrière d'une requête avec une commande d'enregistrement ENREGISTRER en vue d'initialiser la barrière. Par contre, la requête comprend dans ses poids inférieur, l'information qu'il y a besoin d'une synchronisation à deux niveaux (SYNC_2_N). La barrière est activée et passe en état actif avec synchronisation à deux niveaux ACT_2_N.
- Transition T13 : Cette transition correspond à la réception de la barrière d'une requête avec une commande d'extinction ETEINDRE (Commande = ETEINDRE) en vue d'inactiver la barrière et de passer à l'état veille INACT (voir ci-dessus).

### • ACT_1_N

La barrière effectue une synchronisation à un seul niveau. Plusieurs transitions existent à partir de cet état.
- Transition T3 : Cette transition à lieu, chaque fois que la barrière BS (100) reçoit une requête d'un processus P avec une commande d'enregistrement ENREGISTRER (Commande = ENREGISTRER), et ce avant un temps limite prédéterminé (détaillé plus loin). Le compteur interne CNT (406) est décrémenté à chaque transition T3 (CNT > valeur seuil). T3 correspond sensiblement à chaque terminaison des blocs courants B, lors d'un même pas de travail W. Les blocs B "s'accumulent" (T3) au niveau de la barrière BS (100), jusqu'à ce que le compteur CNT (406) indique que tous les blocs B courants ont été exécutés (CNT = valeur seuil). Transition T4 : Cette transition à lieu, lorsque le compteur CNT (406) indique que, tous les blocs B courants ont été exécutés: La barrière reçoit une dernière commande d'enregistrement ENREGISTRER (Commande = ENREGISTRER) et le compteur est décrémenté à sa valeur seuil (CNT = valeur seuil). Il est répondu aux requêtes issues des processus P participant à la barrière BS (100). La réponse indique le succès de la synchronisation. La barrière BS (100) retourne en état prêt PRE.
- Transition T5 : le compteur doit atteindre sa valeur seuil avant un temps limite prédéterminé. Le choix du seuil d'un temps limite est variable et se fait selon l'application. Si ce temps limite prédéterminé est dépassé, la transition T5 permet l'annulation de la synchronisation. Avec optionnellement retour d'un message d'erreur ou ordre d'augmentation de temps limite par exemple. Le temps limite peut être préenregistré sur une unité de contrôle munie d'un compteur de temps (« compteur chronique ») apte à effectuer un décomptage en unité de temps (par exemple µ).
- Transition T14 : Cette transition correspond à la réception de la barrière d'une requête avec une commande d'extinction ETEINDRE (Commande = ETEINDRE) en vue d'inactiver la barrière et de passer à l'état veille INACT.

### • ACT_2_N

La barrière effectue une synchronisation à deux niveaux. Plusieurs transitions existent à partir de cet état.
- Transition T6 : analogue à la transition T3 (voir ci-dessus).
- Transition T7 : dans un premier temps la transition T7 est analogue à T4. En effet, T7 à lieu, lorsque le compteur CNT (406) indique que, tous les blocs B courants ont été exécutés : La barrière reçoit une dernière commande d'enregistrement ENREGISTRER (Commande = ENREGISTRER) et le compteur est davantage décrémenté et atteint sa valeur seuil (CNT = valeur seuil). Contrairement à la transition T4, ici il n'est pas répondu à l'ensemble des requêtes issues des processus P, mais seulement à l'un d'entre eux. La réponse consiste à élire l'un quelconque des processus P en tant que maître M. La barrière procède alors vers l'état synchronisation SYNC (détaillé plus loin). Lors de T7, le temps limite prédéterminé est réinitialisé.

- Transition T8 : analogue à la transition T5 (voir ci-dessus).
- Transition T15 : analogue à la transition T13 (voir ci-dessus).

### • SYNC

Trois transitions possibles :
- Transition T9 : le maître M reçoit une requête avec une commande d'enregistrement ENREGISTRER (Commande = ENREGISTRER), avant le temps limite prédéterminé (avec: CNT = valeur seuil). Il est répondu, à l'ensemble des processus P. La réponse indique le succès de la synchronisation. La barrière BS (100) retourne en état prêt PRE.
- Transition T10 : analogue à la transition T5 (voir ci-dessus).
- Transition T16 : analogue à la transition T13 (voir ci-dessus).

### • ANN

Pour fixer un temps optimal (maximum acceptable) pour l'accomplissement d'une synchronisation, la barrière BS (100) est munie d'un compteur de temps, appelé aussi compteur-chronique. Le compteur est configurable et peut décrire un temps limite. Le compteur démarre un décomptage (généralement en unité µs) à la réception de la première requête. Le temps commence alors à courir. Si le temps limite prédéterminé est dépassé avant réception de la dernière requête à la barrière BS (100), alors celle-ci transite vers l'état annulation ANN.

Le temps limite peut varier selon les barrières, et plus précisément selon les différents états d'une barrière, notamment: ACT_1_N, ACT_2_N, SYNC.

En d'autres termes, si la barrière BS (100) entre en état annulation ANN, ceci est dû au fait que la limite de temps à été dépassé dans l'état précédent, avant réception de toutes les requêtes. La barrière répond alors aux requêtes déjà reçues, par un message d'échec de synchronisation.

Dans la pratique, ce temps limite est programmable. Sa limite supérieure peut être fixée en fonction du contexte, notamment pour éviter des interférences avec les « *time-out* » du processeur.

Trois transitions existent en état annulation ANN :
- Transition T11 : Une requête est reçue avec une commande d'enregistrement ENREGISTRER" (Commande = ENREGISTRER). Auquel cas il est répondu aux requêtes par un message d'erreur tel que décrit ci-dessus.
- Transition T12 : Une requête est reçue avec une commande indiquant le retour à l'état prêt PRE (Commande = PREPA). La barrière retourne à l'état prêt PRE (voir plus haut). Ceci, par exemple, invite l'ensemble les processus (P) à remonter vers la fin d'exécution d'un pas de travail (W) antérieur.
- Transition T17 : analogue à la transition T13 (voir ci-dessus).

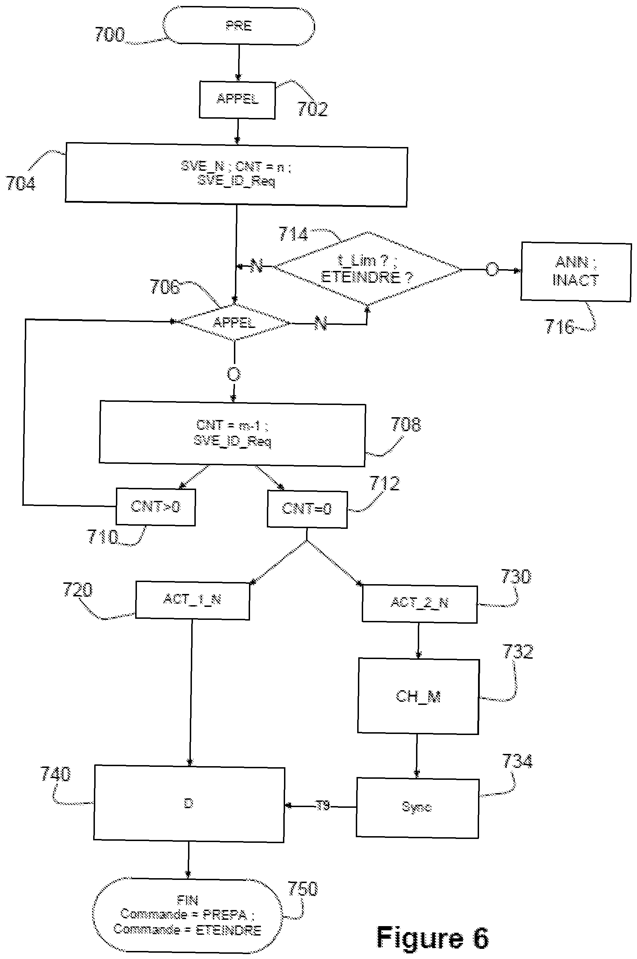

L'organigramme de la figure 6 reprend les principales opérations d'une barrière de synchronisation BS selon un mode de réalisation de l'invention. L'organigramme montre la barrière BS (100) dans son état prêt PRE (opération 700). Le premier processus P ayant terminé son bloc B, informe (par un appel) la barrière BS (100) au moyen d'une requête visant le gestionnaire HBM (400) (opération 702). La requête comprend l'information sur le ou les niveaux de synchronisation (commande = ENREGISRTER pour ACT_1_N ou ACT_2_N par exemple). Le compteur CNT (406) est initialisé (généralement à n = nombre de processus P) et la barrière BS (100) stocke d'une part un identifiant SVE_ID_Req correspondant audit premier processus P et d'autre part l'information sur le ou les niveaux de synchronisation SVE_N (opération 704). La barrière BS (100) activée attend dès lors les prochains appels des autres processus P (opération 706). Si le temps limite prédéterminé est dépassé ou si la barrière BS (100) reçoit une requête avec une commande d'extinction (commande = ETEINDRE) (opération 714), la barrière passe respectivement en état d'annulation ANN ou veille INACT (opération 716). Par contre, si un autre processus P informe la barrière de la terminaison de son bloc en cours (sans dépassement du temps limite t_Lim, et sans commande = ETEINDRE), le compteur CNT (406) est décrémenté (opération 708, avec m = nombre de processus n'ayant pas encore terminé leur bloc B lors du pas de travail W en cours). Parallèlement à la décrémentation, la barrière stocke l'identifiant SVE_ID_Req correspondant au processus P ayant dernièrement informé la barrière BS (100) (opération 708). La barrière BS (100) vérifie ensuite si le compteur CNT (406) a atteint sa valeur seuil (opérations 710 et 712). Si non, (opération 710 ; CNT > 0) la barrière retourne en état d'attente (opération 706); Si oui (opération 712 ; CNT= 0), la barrière progresse en vue de réaliser la synchronisation (selon niveau fixé à l'opération 704). Après une synchronisation ayant été fixée à un niveau (opération 720 ; ACT_1_N), la barrière répond à chaque processus P par des donnés D, comprenant par exemple une commande d'avancement vers un prochain pas de travail W, (opération 740). Lorsque le niveau de synchronisation a été fixé à deux niveaux (opération 730 ; ACT_1_N), c'est-à-dire par exemple pour plusieurs groupes de processus P (voir plus haut), la barrière BS (100) élit un maître M parmi les processus P en cours (opération 732 ; CH_M) et effectue une seconde synchronisation (opération 734 ; SYNC) avant la réponse par des donnés D (opération 740). La synchronisation se termine (opération 750) avec le retour en état prêt PRE (command = PREPA) ou avec une inactivation de la barrière (command = ETEINDRE).

Bien évidemment, l'invention ne se limite pas aux modes de réalisation décrits ci-avant mais englobe toutes les réalisations que pourra envisager l'homme de l'art dans le cadre des revendications annexées.

Ainsi dans le mode de réalisation décrit, une seule barrière BS est utilisée pour la synchronisation des processus. Il peut être utile d'intégrer dans un système informatique plusieurs barrières de synchronisation BS et notamment pour permettre de synchroniser plusieurs groupes de processus, chaque groupe concourant à l'exécution d'une tâche différente. Par exemple en calcul scientifique sur une machine de 16 coeurs, on peut envisager que 2 calculs indépendants se fassent en utilisant chacun 8 coeurs, on aura alors 2 groupes de 8 processus, chaque processus s'exécutant sur un coeur différent. Dans cet exemple on aura besoin de 2 barrières.

Lorsque plusieurs barrières de synchronisation BS sont utilisées celles-ci peuvent bien évidemment être implémenté dans un même composant ou en encore dans des composants différents. En effet, le dispositif peut comporter plusieurs circuits matériels, dont on accède aux espaces d'adresses par des segments tirés des desdites données de chaque appel. Dans ce cas on peut prévoir que chacun des circuits matériels est branché soit sur un même circuit, soit des circuits distincts.

On note également que l'on peut aisément envisager un mélange entre barrières de type logiciel et des barrières selon l'invention, à savoir avec un circuit matériel. Le dispositif informatique décrit ici peut donc en outre comprendre une barrière de synchronisation logicielle, opérant en combinaison avec ledit le circuit matériel.

## Revendications

1. Dispositif informatique à barrière de synchronisation, comprenant :
- une mémoire (RAM, 202),
- une unité de traitement, capable de traitement multiprocessus sur différents processeurs (PZ, 200) et permettant une exécution en parallèle de blocs (B) par des processus (P), lesdits blocs (B) étant associés par groupe en pas de travail (W) successifs,
- un circuit matériel (HBM, 400) avec un espace d'adresse exploitable vers la mémoire (RAM, 202), capable de recevoir un appel de chaque processus (P) indiquant la fin d'exécution d'un bloc (B) en cours, chaque appel comprenant des données,
les processus (P) comportant un premier groupe de processus et un deuxième groupe de processus, distincts l'un de l'autre,
ledit circuit matériel (HBM, 400) étant agencé pour réaliser un premier niveau de synchronisation des processus (P) du premier groupe, respectivement du deuxième groupe, en réalisant les étapes suivantes :
• extraire le nombre de processus du premier groupe, respectivement du deuxième groupe, à partir d'un premier appel d'un processus du premier groupe, respectivement du deuxième groupe,
• décompter sur ce nombre à partir d'autres appels,
les processus du premier groupe, respectivement du deuxième groupe, étant synchronisés lorsque le décomptage indique que l'ensemble des blocs (B) des processus du premier groupe, respectivement du deuxième groupe, du pas de travail en cours (W) ont été exécutés,
ledit circuit matériel (HBM, 400) étant en outre agencé pour :
• lorsque le premier niveau de synchronisation est réalisé pour le premier groupe, respectivement le deuxième groupe, choisir un des processus (P) du premier groupe, respectivement du deuxième groupe, en tant que maître,
• envoyer une réponse au processus maître du premier groupe, respectivement du deuxième groupe, indiquant que ce processus est le maître du premier groupe, respectivement du deuxième groupe, de sorte que le processus maître du premier groupe et le processus maître du deuxième groupe accomplissent un second niveau de synchronisation pour synchroniser entre eux le premier groupe et le deuxième groupe,
• recevoir un appel du processus maître du premier groupe, respectivement du deuxième groupe, indiquant que le processus maître a réalisé le second niveau de synchronisation,
• suite à la réception de l'appel du processus maître du premier groupe et de l'appel du processus maître du deuxième groupe indiquant que le processus maître du premier groupe et le processus maître du deuxième groupe ont réalisé le second niveau de synchronisation, envoyer des réponses aux autres processus du premier groupe et du deuxième groupe pour autoriser l'exécution de blocs (B) d'un pas de travail ultérieur,
l'accès à l'espace d'adresse du circuit matériel se faisant par segments tirés desdites données de chaque appel, ces données comportant en particulier l'adresse du circuit matériel dans l'espace d'adresse.

2. Dispositif selon la revendication 1, dans lequel le second niveau de synchronisation est une barrière de synchronisation de nature logicielle.

3. Dispositif selon la revendication 1 ou 2, dans lequel le circuit matériel comprend un microprogramme (micro-Prog, 402).

4. Dispositif informatique selon la revendication 3, dans lequel le dispositif comprend en outre une mémoire dédiée (Ded_MEM, 404) en liaison avec ledit microprogramme (micro-Prog, 402).

5. Dispositif informatique selon l'une quelconque des revendications 1 à 4, dans lequel le circuit matériel est agencé pour suspendre les réponses à chaque appel jusqu'à vérification d'une condition de fin indiquant que tous les processus (P) ont signalé la fin d'exécution du bloc (B) du pas de travail en cours (W).

6. Dispositif informatique selon l'une quelconque des revendications 1 à 5, dans lequel le circuit matériel (HBM, 400) est agencé pour répondre à chaque appel par une sortie de données (D) et d'autoriser les processus (P) à transiter vers le pas de travail (W) ultérieur lorsque tous les processus ont signalé la fin d'exécution du bloc (B) du pas de travail en cours (W).

7. Dispositif informatique selon l'une quelconque des revendications 1 à 6, dans lequel chaque appel indique ledit nombre de processus.

8. Dispositif informatique selon l'une des revendications 1 à 7, dans lequel l'ensemble des appels sont de même type (ENREGISTRER) défini par les données de chaque appel.

9. Dispositif informatique selon l'une des revendications 1 à 8, dans lequel le dispositif comporte plusieurs circuits matériels, dont on accède aux espaces d'adresses par segments tirés desdites données de chaque appel.

10. Dispositif informatique selon la revendication 9, dans lequel chacun desdits circuits matériels est branché sur un même circuit.

11. Dispositif informatique selon la revendication 9, dans lequel chacune chacun desdits circuits matériels est branché sur un circuit distinct.

12. Dispositif informatique selon l'une des revendications 1 à 11, dans lequel le dispositif comprend en outre une barrière de synchronisation logicielle, opérant en combinaison avec ledit circuit matériel.

13. Dispositif informatique selon l'une des revendications 1 à 12, dans lequel le dispositif comprend en outre un gestionnaire d'accès en mémoire (CACHE COHER MGR, 206), et dans lequel lesdits appels vers le circuit matériel (HBM, 400) sont directs, évitant le gestionnaire d'accès en mémoire.

14. Procédé de traitement informatique au niveau processus, du type comprenant les étapes suivantes :
a. décomposer une tâche (T) en sous-tâches exécutées en tant que processus (P) composés de blocs (B) successifs, les processus (P) comportant un premier groupe de processus et un deuxième groupe de processus, distincts l'un de l'autre ;
b. prévoir une première barrière de synchronisation (BS, 100), respectivement une deuxième barrière de synchronisation (BS, 100), munie d'un compteur (CNT, 406) en rapport avec le nombre de processus (P) du premier groupe, respectivement du deuxième groupe, dans un gestionnaire physique de barrière (HBM, 400) se trouvant dans un circuit matériel avec un espace d'adresse ;
c. dans chaque processus (P) du premier groupe, respectivement du deuxième groupe, définir un premier bloc (B) comme bloc en cours et l'exécuter, tout en accédant à ladite première barrière de synchronisation (BS, 100), respectivement deuxième barrière de synchronisation, pour décrémenter ledit compteur (CNT, 406) lorsque l'exécution de ce bloc (B) en cours se termine, l'accès étant réalisé au moyens d'un appel, chaque appel comportant des données, ces données comportant en particulier l'adresse du circuit matériel dans l'espace d'adresse ;
d. dans la barrière de synchronisation :
• réaliser un premier niveau de synchronisation des processus (P) des processus du premier groupe, respectivement du deuxième groupe, en réalisant les étapes suivantes :
• extraire le nombre de processus du premier groupe, respectivement du deuxième groupe, à partir d'un premier appel d'un processus du premier groupe, respectivement du deuxième groupe,
• initialiser le compteur à partir de ce nombre,
• décompter sur ce nombre à partir d'autres appels,
les processus du premier groupe, respectivement du deuxième groupe, étant synchronisés lorsque le décomptage indique que l'ensemble des blocs (B) du pas de travail en cours (W) ont été exécutés,
• lorsque le premier niveau de synchronisation est réalisé pour le premier groupe, respectivement le deuxième groupe, choisir un des processus (P) du premier groupe, respectivement du deuxième groupe, en tant que maître,
• envoyer une réponse au processus maître du premier groupe, respectivement du deuxième groupe, indiquant que ce processus est le maître du premier groupe, respectivement du deuxième groupe,
e. dans le processus maître du premier groupe et le processus maître du deuxième groupe :
• participer à un deuxième niveau de synchronisation pour synchroniser entre eux le premier groupe et le deuxième groupe,
• envoyer un appel à la barrière de synchronisation indiquant que le processus maître du premier groupe, respectivement du deuxième groupe, a réalisé le deuxième niveau de synchronisation,
f. dans la barrière de synchronisation :
• suite à la réception de l'appel du processus maître du premier groupe et de l'appel du processus maître du deuxième groupe indiquant que le processus maître du premier groupe et le processus maître du deuxième groupe ont réalisé le second niveau de synchronisation, envoyer des réponses aux autres processus du premier groupe et du deuxième groupe pour autoriser l'exécution de blocs (B) d'un pas de travail ultérieur,
g. dans chaque processus (P) où l'exécution du bloc (B) en cours est terminée, attendre une réponse de ladite barrière de synchronisation (BS, 100), la réponse étant directement liée au compteur (CNT, 406) et émise lorsque celui-ci indique que tous les blocs (B) courants sont exécutés,
h. lorsque tous les blocs (B) courants sont exécutés, définir de nouveaux blocs (B) en cours à partir du bloc suivant de chacun des processus (P), et répéter les étapes c. à f. avec ces nouveaux blocs (B) en cours.

15. Procédé selon la revendication 14, dans lequel le second niveau de synchronisation est réalisé par une barrière de synchronisation de nature logicielle.

## Patentansprüche

1. Computergerät mit Synchronisationsbarriere, umfassend:
- einen Speicher (RAM, 202),
- eine Verarbeitungseinheit, die in der Lage ist, auf verschiedenen Prozessoren (PZ, 200) eine Mehrprozessorverarbeitung durchzuführen und eine parallele Ausführung von Blöcken (B) durch Prozesse (P) zu ermöglichen, wobei die Blöcke (B) in aufeinanderfolgenden Arbeitsschrittgruppen (W) assoziiert sind;
- eine Hardwareschaltung (HBM, 400) mit einem nutzbaren Adressraum für den Speicher (RAM, 202), die in der Lage ist, einen Aufruf von jedem Prozess (P) zu empfangen, der das Ende der Ausführung eines laufenden Blocks (B) anzeigt, wobei jeder Aufruf Daten enthält, wobei die Prozesse (P) eine erste Gruppe von Prozessen und eine zweite Gruppe von Prozessen umfassen, die sich voneinander unterscheiden,
wobei die Hardwareschaltung (HBM, 400) eingerichtet ist, um eine erste Synchronisationsstufe der Prozesse (P) der ersten Gruppe bzw. der zweiten Gruppe zu realisieren, indem sie folgende Schritte realisiert:
- - extrahieren der Anzahl von Prozessen der ersten Gruppe bzw. der zweiten Gruppe ausgehend von einem ersten Aufruf eines Prozesses der ersten Gruppe bzw. der zweiten Gruppe
- - ausgehend von anderen Aufrufen von dieser Anzahl Abziehen,
wobei die Prozesse der ersten Gruppe bzw. der zweiten Gruppe synchronisiert werden, wenn das Abziehen anzeigt, dass die Gesamtheit der Blöcke (B) der Prozesse der ersten Gruppe bzw. der zweiten Gruppe des aktuellen Arbeitsschritts (W) ausgeführt worden sind,
wobei die Hardwareschaltung (HBM, 400) außerdem eingerichtet ist, um:
- - einen der Prozesse (P) der ersten Gruppe bzw. der zweiten Gruppe als Master auszuwählen, wenn die erste Synchronisationsstufe für die erste Gruppe bzw. die zweite Gruppe realisiert ist,
- - eine Antwort auf den Master-Prozess der ersten Gruppe bzw. der zweiten Gruppe zu senden, die anzeigt, dass dieser Prozess der Master der ersten Gruppe bzw. der zweiten Gruppe ist, sodass der Master-Prozess der ersten Gruppe und der Master-Prozess der zweiten Gruppe eine zweite Synchronisationsstufe erreichen, um zwischen ihnen die erste Gruppe und die zweite Gruppe zu synchronisieren,
- - einen Aufruf vom Master-Prozess der ersten Gruppe bzw. der zweiten Gruppe zu empfangen, der anzeigt, dass der Master-Prozess die zweite Synchronisationsstufe realisiert hat,
- - nach Empfang des Master-Prozessaufrufs der ersten Gruppe und des Master-Prozessaufrufs der zweiten Gruppe anzuzeigen, dass der Master-Prozess der ersten Gruppe und der Master-Prozess der zweiten Gruppe die zweite Synchronisationsstufe realisiert haben, Antworten an die anderen Prozesse der ersten Gruppe und der zweiten Gruppe zu senden, um die Ausführung von Blöcken (B) eines anschließenden Arbeitsschritts zu autorisieren,
wobei der Zugriff auf den Adressraum der Hardwareschaltung durch Segmente geschieht, die aus den Daten jedes Aufrufs stammen, wobei diese Daten insbesondere die Adresse der Hardwareschaltung im Adressraum beinhalten.

2. Gerät nach Anspruch 1, wobei die zweite Synchronisationsstufe eine softwarebasierte Synchronisationsbarriere ist.

3. Gerät nach Anspruch 1 oder 2, wobei die Hardwareschaltung ein Mikroprogramm (micro-Prog, 402) umfasst.

4. Computergerät nach Anspruch 3, wobei das Gerät außerdem einen dedizierten Speicher (Ded_MEM, 404) in Verbindung mit dem Mikroprogramm (micro-Prog, 402) umfasst.

5. Computergerät nach einem der Ansprüche 1 bis 4, wobei die Hardwareschaltung so eingerichtet ist, dass sie die Antworten auf jeden Aufruf bis zur Überprüfung einer Abbruchbedingung aussetzt, anzeigend, dass alle Prozesse (P) die Beendigung der Ausführung des Blocks (B) des aktuellen Arbeitsschritts (W) signalisiert haben.

6. Computergerät nach einem der Ansprüche 1 bis 5, wobei die Hardwareschaltung (HBM, 400) so angeordnet ist, dass sie auf jeden Aufruf mit einer Datenausgabe (D) antwortet und die Prozesse (P) zu autorisieren, zu dem anschließenden Arbeitsschritt (W) durchzulaufen, wenn alle Prozesse das Ende der Ausführung von Block (B) des aktuellen Arbeitsschritts (W) signalisiert haben.

7. Computergerät nach einem der Ansprüche 1 bis 6, wobei jeder Aufruf die Anzahl von Prozessen angibt.

8. Computergerät nach einem der Ansprüche 1 bis 7, wobei die Gesamtheit der Aufrufe vom gleichen Typ (SAVE) sind, der durch die Daten von jedem Aufruf definiert ist.

9. Computergerät nach einem der Ansprüche 1 bis 8, wobei das Gerät mehrere Hardwareschaltungen beinhaltet, auf deren Adressräume durch Segmente zugegriffen wird, die aus den Daten jedes Aufrufs stammen.

10. Computergerät nach Anspruch 9, wobei jede der Hardwareschaltungen auf einer gleichen Schaltung verbunden ist.

11. Computergerät nach Anspruch 9, wobei jeder der Hardwareschaltkreise mit einem separaten Schaltkreis verbunden ist.

12. Computergerät nach einem der Ansprüche 1 bis 11, wobei das Gerät außerdem eine Softwaresynchronisationsbarriere umfasst, die in Kombination mit der Hardwareschaltung arbeitet.

13. Computergerät nach einem der Ansprüche 1 bis 12, wobei das Gerät außerdem einen Speicherzugriffsmanager (CACHE COHER MGR, 206) umfasst und wobei die Aufrufe an die Hardwareschaltung (HBM, 400) direkt sind, wodurch der Speicherzugriffsmanager vermieden wird.

14. Verfahren zur Computerverarbeitung auf der Prozessebene des Typs, der die folgenden Schritte umfasst:
a. Zerlegen einer Aufgabe (T) in Teilaufgaben, die als Prozesse (P) ausgeführt werden, die aus aufeinanderfolgenden Blöcken (B) bestehen, wobei die Prozesse (P) eine erste Prozessgruppe und eine zweite Prozessgruppe beinhalten, die sich voneinander unterscheiden;
b. Bereitstellen einer ersten Synchronisationsbarriere (BS, 100) bzw. einer zweiten Synchronisationsbarriere (BS, 100), die im Zusammenhang mit der Anzahl der Prozesse (P) der ersten Gruppe bzw. der zweiten Gruppe in einem physischen Barrieremanager (HBM, 400), der sich in einer Hardwareschaltung mit einem Adressraum befindet, mit einem Zähler (CNT, 406) ausgestattet ist;
c. Definieren eines ersten Blocks (B) als aktueller Block und ausführen desselben in jedem Prozess (P) der ersten Gruppe bzw. der zweiten Gruppe, während auf die erste Synchronisationsbarriere (BS, 100) bzw. auf die zweite Synchronisationsbarriere zugegriffen wird, um den Zähler (CNT, 406) zu dekrementieren, wenn die Ausführung dieses aktuellen Blocks (B) endet, wobei der Zugriff mittels eines Aufrufs realisiert wird, wobei jeder Aufruf Daten beinhaltet, wobei diese Daten insbesondere die Adresse der Hardwareschaltung im Adressraum beinhaltet;
d. in der Synchronisationsbarriere:
- Realisieren einer ersten Stufe der Prozesssynchronisation (P) der Prozesse der ersten Gruppe bzw. der zweiten Gruppe, indem die folgenden Schritte realisiert werden:
- - Extrahieren der Anzahl der Prozesse der ersten Gruppe bzw. der zweiten Gruppe ausgehend von einem ersten Aufruf eines Prozesses der ersten Gruppe bzw. der zweiten Gruppe,
- - Initialisieren des Zählers ausgehend von dieser Anzahl,
- -ausgehend von anderen Aufrufen von dieser Anzahl Abziehen,
wobei die Prozesse der ersten Gruppe bzw. der zweiten Gruppe synchronisiert werden, wenn das Abziehen anzeigt, dass die Gesamtheit an Blöcken (B) des aktuellen Arbeitsschritts (W) ausgeführt worden sind,
- wenn die erste Synchronisationsstufe für die erste Gruppe bzw. die zweite Gruppe realisiert ist, einen der Prozesse (P) der ersten Gruppe bzw. der zweiten Gruppe als Master auswählen,
- eine Antwort an den Master-Prozess der ersten Gruppe bzw. der zweiten Gruppe senden, die anzeigt, dass dieser Prozess der Master der ersten Gruppe bzw. der zweiten Gruppe ist,
e. im Master-Prozess der ersten Gruppe und im Master-Prozess der zweiten Gruppe:
- Teilnehmen an einer zweiten Synchronisationsstufe, um zwischen ihnen die erste Gruppe und die zweite Gruppe zu synchronisieren,
- einen Aufruf an die Synchronisationsbarriere senden, der angibt, dass der Master-Prozess der ersten Gruppe bzw. der zweiten Gruppe die zweite Synchronisationsstufe realisiert hat,
f. in der Synchronisationsbarriere:
- nach Empfang des Aufrufs des Master-Prozesses der ersten Gruppe und dem Aufruf des Master-Prozesses der zweiten Gruppe, der angibt, dass der Master-Prozess der ersten Gruppe und der Master-Prozess der zweiten Gruppe die zweite Synchronisationsstufe realisiert haben, Antworten an die anderen Prozesse der ersten Gruppe und der zweiten Gruppe senden, um die Ausführung von Blöcken (B) eines anschließenden Arbeitsschritts zu autorisieren,
g. bei jedem Prozess (P), bei dem die Ausführung des aktuellen Blocks (B) abgeschlossen ist, auf eine Antwort von der Synchronisationsbarriere (BS, 100) warten, wobei die Antwort direkt mit dem Zähler (CNT, 406) zusammenhängt und ausgegeben wird, wenn er anzeigt, dass alle aktuellen Blöcke (B) ausgeführt sind,
h. wenn alle aktuellen Blöcke (B) ausgeführt sind, Definieren von neuen Blöcken (B), ausgehend von dem nächsten Block eines jeden Prozesses (P) und wiederholen der Schritte c. bis f. mit diesen neuen aktuellen Blöcken (B) .

15. Verfahren nach Anspruch 14, wobei die zweite Synchronisationsstufe durch eine softwarebasierte Synchronisationsbarriere realisiert wird.

## Claims

1. Computer device with a synchronization barrier, comprising:
- a memory (RAM, 202),
- a processing unit, capable of multiprocess processing on various processors (PZ, 200) and enabling a parallel execution of blocks (B) by processes (P), said blocks (B) being associated by groups in successive work steps (W),
- a hardware circuit (HBM, 400) with a usable address space to the memory (RAM, 202), capable of receiving a call from each process (P) indicating the end of execution of a block (B) in progress, each call comprising data,
wherein the processes (P) include a first group of processes and a second group of processes, distinct from each other,
wherein said hardware circuit (HBM, 400) is arranged to perform a first level of synchronization of the first group, respectively second group, processes (P), by performing the following steps:
• extracting the number of first group, respectively second group, processes, from a first call of a process from the first group, respectively second group,
• downcounting on this number from other calls,
wherein the first group, respectively second group, processes are synchronized when the downcounting indicates that all the blocks (B) of the first group, respectively second group, processes of the work step (W) in progress have been executed,
wherein said hardware circuit (HBM, 400) is further arranged to:
• when the first level of synchronization has been performed for the first group, respectively second group, choose one of the first group, respectively second group, processes as a master,
• send a response to the master process of the first group, respectively second group, indicating that this process is the master of the first group, respectively second group, such that the first group master process and the second group master process perform a second level of synchronization to synchronize the first group and the second group with each other,
• receiving a call from the first group, respectively second group, master process, indicating that the master process has performed the second level of synchronization,
• after receipt of the call from the first group master process and the call from the second group master process, indicating that the first group master process and the second group master process have performed the second level of synchronization, send responses to the other processes of the first group and the second group to authorize the execution of blocks (B) of a later work step,
wherein the access to the hardware circuit's address space is performed by segments drawn from said data of each call, said data more particularly including the address of the hardware circuit in the address space.

2. Device according to claim 1, wherein the second level of synchronization is a software synchronization barrier.

3. Device according to claim 1 or 2, wherein the hardware circuit comprises a microprogram (micro-Prog, 402).

4. Device according to claim 3, wherein the device further comprises a dedicated memory (Ded_MEM, 404) in connection with said microprogram (micro-Prog, 402).

5. Computer device according to any one of claims 1 to 4, wherein the hardware circuit is arranged to suspend the responses to each call, until an end condition indicating that all the processes (P) have signalled the end of execution of the block (B) of the work step (W) in progress is verified.

6. Computer device according to any one of claims 1 to 5, wherein the hardware circuit (HBM, 400) is arranged to respond to each call with a data output (D) and authorize the processes (P) to transit to the later work step (W) when all the processes have signalled the end of execution of the block (B) of the work step (W) in progress.

7. Computer device according to any one of claims 1 to 6, wherein each call indicates said number of processes.

8. Computer device according to one of claims 1 to 7, wherein all the calls are of the same type (RECORD) defined by the data of each call.

9. Computer device according to one of claims 1 to 8, wherein the device comprises several hardware circuits, the address spaces of which are accessed by segments drawn from said data of each call.

10. Computer device according to claim 9, wherein each of said hardware circuits is connected to the same circuit.

11. Computer device according to claim 9, wherein each of said hardware circuits is connected to a separate circuit.

12. Computer device according to one of claims 1 to 11, wherein the device further comprises a software synchronization barrier, working in combination with said hardware circuit.

13. Computer device according to one of claims 1 to 12, wherein the device further comprises a memory access manager (CACHE COHER MGR, 206), and wherein said calls to the hardware circuit (HBM, 400) are direct, avoiding the memory access manager.

14. Computer processing method at the process level, of the type comprising the following steps:
a. breaking down a task (T) into sub-tasks executed as processes (P) composed of successive blocks (B), wherein the processes (P) include a first group of processes and a second group of processes, distinct from each other;
b. providing a first synchronization barrier (BS, 100), respectively a second synchronization barrier (BS, 100), fitted with a counter (CNT, 406) related to the number of processes (P) of the first group, respectively second group, in a barrier physical manager (HBM, 400) arranged in a hardware circuit with an address space;
c. in each process (P) of the first group, respectively second group, defining a first block (B) as the block in progress and executing it, while having access to said first synchronization barrier (BS, 100), respectively second synchronization barrier, to decrement said counter (CNT, 406) when the execution of this block (B) in progress terminates, wherein the access is performed thanks to a call, each call including data, said data more particularly including the address of the hardware circuit in the address space;
d. in the synchronization barrier:
• performing a first level of synchronization of the first group, respectively second group, processes (P), by performing the following steps:
• extracting the number of first group, respectively second group, processes, from a first call of a process from the first group, respectively second group,
• initializing the counter from this number,
• downcounting on this number from other calls,
wherein the first group, respectively second group, processes are synchronized when the downcounting indicates that all the blocks (B) of the work step (W) in progress have been executed,
• when the first level of synchronization has been performed for the first group, respectively second group, choosing one of the first group, respectively second group, processes (P) as a master,
• send a response to the master process of the first group, respectively second group, indicating that this process is the master of the first group, respectively second group,
e. in the first group master process and second group master process:
• participating to a second level of synchronization to synchronize the first group and the second group with each other,
• sending a call to the synchronization barrier indicating that the first group, respectively second group, master process has performed the second level of synchronization,
f. in the synchronization barrier:
• after receipt of the call from the first group master process and the call from the second group master process, indicating that the first group master process and the second group master process have performed the second level of synchronization, send responses to the other processes of the first group and the second group to authorize the execution of blocks (B) of a later work step,
g. in each process (P) where the execution of the block (B) in progress is terminated, waiting for a response of said synchronization barrier (BS, 100), the response being directly related to the counter (CNT, 406) and emitted when the latter indicates that all the blocks (B) in progress are executed,
h. when all the blocks (B) in progress are executed, defining new blocks (B) in progress from the following block of each of the processes (P), and repeat steps c. to f. with these new blocks (B) in progress.

15. Method according to claim 14, wherein the second level of synchronization is performed by a software synchronization barrier.
